# EUROPEAN PATENT SPECIFICATION

(11) **EP 3 522 345 B1**
(45) Date of publication and mention of the grant of the patent: **24.03.2021**
(21) Application number: 19155350.2
(22) Date of filing: 04.02.2019
(51) Int. Cl.: H02K 21/18, A01K 63/04, H02K 47/20, H02K 5/10, H02K 1/14, H02K 5/04, H02K 11/00, H02K 16/00, A01K 63/06, A01K 63/00

(54) **POWER GENERATION APPARATUS AND AQUARIUM EQUIPMENT**
STROMERZEUGUNGSVORRICHTUNG UND AQUARIUMAUSRÜSTUNG
APPAREIL DE PRODUCTION DE PUISSANCE ET ÉQUIPEMENT D'AQUARIUM

(30) Priority: 06.02.2018 CN 201820213891 U; 26.03.2018 CN 201820412462 U
(43) Date of publication of application: 07.08.2019
(73) Proprietor: Guangdong Boyu Group Co., Ltd, Raoping County Chaozhou Guangdong 515700 (CN)
(72) Inventor: Yu, Youkai, Chaozhou City, Guangdong 515700 (CN); Yu, Bingyan, Chaozhou City, Guangdong 515700 (CN); Yu, Jianqin, Chaozhou City, Guangdong 515700 (CN)
(74) Representative: DREISS Patentanwälte PartG mbB

(56) References cited:
- JP-A- S61 167 360
- US-A1- 2009 226 335
- US-A1- 2011 239 951
- US-A1- 2016 172 947

## Description

### TECHNICAL FIELD

The present invention relates to the technical field of aquarium devices, and, more particularly, to a power generation apparatus and an aquarium equipment.

### BACKGROUND

A water pump is usually mounted in an aquarium for pumping water. The water pump includes a housing, which includes a pump housing, a stator chamber, and a rotor chamber. An impeller is mounted in the pump housing. A stator is mounted in the stator chamber. A permanent magnet rotor is mounted in the rotor chamber. The permanent magnet rotor is fixedly connected to the impeller by a rotating shaft or is directly fixedly connected to the impeller. The rotating shaft is arranged at an axis of the permanent magnet rotor. The stator, after energized, drives the permanent magnet rotor to rotate, thereby driving the impeller to rotate and further achieving the purpose of pumping water under the action of the pump housing.

However, the above-mentioned water pump only serves the function of pumping water, and other low-power electric devices such as a lamp in the aquarium need to be supplied power independently. Mainly there are two ways of supplying power thereto. The first one is connecting the electric devices to an external power source by a conductive wire. The second one is supplying power to the electric device by a battery. When the first power supply method is adopted, the electrical connections of the electric devices would need to be disconnected before disassembling or assembling the water pump, which adversely affects the disassembly and assembly efficiency of the water pump. When the second power supply method is adopted, the battery needs to be replaced when it runs out of power, which is troublesome.

US2009226335 (A1) discloses submersible pump capable of providing low voltage power supply which comprises a pump body and a filter cover connected to the pump body; a stator containing cavity and a rotor containing cavity is provided in the pump body; the outside of the rotor containing cavity is provided with an impeller room, and the upside of the impeller room is provided with a water outlet; a silicon steel sheet group of a stator and a stator coil are encapsulated in the stator containing cavity in the pump body; a permanent magnet rotor is fixed in the rotor containing cavity in the pump body via a rotor shaft; an impeller at one end of the permanent magnet rotor is located in the impeller room; it also comprises an internal transformer; the internal transformer is provided with a low voltage coil, and the stator coil acting as a high voltage coil, and the two coils are located at the silicon steel sheet group of the stator; the low voltage coil provides AC low voltage power supply to the outside.

JPS61167360 identifies the following technical problem and solution. A PURPOSE: To enable to restrict a rotating direction to one direction by dividing a stator core in which a drive coil is wound into a plurality in a thrust direction. CONSTITUTION: In a small-sized synchronous motor in which a stator core 11 wound with a drive coil 15 is opposed to a permanent magnet rotor 13, the core 11 is divided into a plurality in a thrust direction to form independent stator cores 11a, 11b. The coil 15 and the rotor 13 are also divided into 15a/15b, 13a/13b corresponding to the division of the core 11. In this case, the rotors 13a, 13b are displaced at the magnetic axes. Thus, when the phases of currents flowed to the coils 15a, 15b are displaced, the rotating direction of the rotor 13 can be restricted to one direction.

US2011239951A1 discloses an aquarium pump having LED lamps, wherein the coil unit of a motor unit in the pump housing is used as a primary coil unit, and a first insulating layer is used to envelop the primary coil unit, then a secondary coil unit is used to wind the primary coil unit; taking advantage of induction of the secondary coil unit to the primary coil unit to generate a low voltage for using by the LED illuminating lamp set.

US20160172947A1 discloses a high-efficient magnetic rotating apparatus and motor generator are provided which are capable of further reducing a detent torque. The magnetic rotating apparatus and the motor generator each includes a stator in which cores with a winding are disposed and a rotor in which permanent magnets are disposed. The permanent magnet has a magnetic pole of an N-pole or an S-pole and has a counter face, opposed to the core, with an inclination angle. In each set of magnet bodies, the two permanent magnets are so disposed that two counter faces have different magnetic poles and are inclined reversely. The two permanent magnets are magnetically connected through a joint member made of a magnetic material so that the two counter faces act as magnetic poles on both ends of the magnet body.

### SUMMARY

An object of the present invention is therefore to provide a power generation apparatus according to claim 1, which can achieve the purpose of supplying power to an electric device while pumping water at the same time.

Another object of the present invention is to provide an aquarium equipment, whereby an independent power supply device is not needed to power up the electric device, and so the electrical connection of the electric device can be directly cut off when the electric device is removed.

To achieve these objects, the present invention adopts the following technical solutions.

The power generation apparatus includes a water pump and a magnetic induction generator.

The water pump includes a stator, a first rotor assembly, and an impeller connected to the first rotor assembly. The first rotor assembly includes a first permanent magnet rotor and a first rotating shaft disposed at an axis of the first permanent magnet rotor. The first permanent magnet rotor is disposed adjacent to the stator.

The magnetic induction generator is disposed adjacent to the stator or to the first permanent magnet rotor and is operative to be coupled to an electric device. The stator comprises a coil winding operative to be coupled to an external power source. When the coil winding is coupled to an input alternating current, the first permanent magnet rotor is configured to rotate enabling the magnetic induction generator to generate an induced current to power up the electric device.

The magnetic induction generator includes a second rotor assembly and a power generation induction coil.

The second rotor assembly includes a second permanent magnet rotor and a second rotating shaft disposed at an axis of the second permanent magnet rotor. The power generation induction coil is wound around an exterior of the second permanent magnet rotor, and when the coil winding is coupled to the input alternating current, the second permanent magnet rotor is operative to rotate relative to the power generation induction coil.

Typically, an axis of the second rotating shaft and an axis of the first rotating shaft forms an included angle that lies in the range of 0° to 15°.

Typically, the second rotating shaft runs parallel to the first rotating shaft.

Typically, the magnetic induction generator further includes a reel disposed outside the second permanent magnet rotor. The second permanent magnet rotor being clearance-fitted to the reel. The power generation induction coil is wound around the reel along the axis of the second permanent magnet rotor. Both end of the reel that reside along a length thereof are each provided with a rotating shaft seat. The second rotating shaft passes through the reel to be connected to the rotating shaft seat.

Typically, the power generation induction coil includes a first power generation induction coil and a second power generation induction coil spaced apart and coupled to each other. The first power generation induction coil and the second power generation induction coil are symmetrically arranged at two sides on a circumference of the second permanent magnet rotor.

Typically, the water pump further includes a housing. The stator, the first rotor assembly, and the impeller are all arranged in the housing.

Typically, the housing defines a mounting slot at a location adjacent to the first permanent magnet rotor, and the magnetic induction generator is detachably mounted in the first mounting slot.

Typically, the power generation apparatus further includes a mounting box in which the magnetic induction generator is detachably mounted, where the mounting box is detachably mounted in the first mounting slot, and the power generation induction coil comprises a lead wire that passes through the mounting box to be coupled to the electric device.

Typically, the mounting box includes a box body having an open end and a cover body configured to cover the open end. A positioning step is provided on an inner wall of the box body that directly faces the open end. A plurality of positioning columns are provided at intervals on a side of the cover body adjacent to the box body. When the cover body covers the open end, both sides of the reel abut against the positioning step and the plurality of positioning columns, respectively.

Typically, the box body is provided with a mounting hole located adjacent to the open end and an admission hole in communication with the mounting hole. The admission hole has a smaller size than that of the mounting hole. The positioning step is formed between the admission hole and the mounting hole.

The cover body is provided with at least two of the positioning columns disposed at intervals. An admission area is formed between two positioning columns. The magnetic induction generator is mounted in the mounting hole. One end of the second rotating shaft extends into the admission hole, and the other end extends into the admission area.

Typically, the electric device includes a first lamp disposed outside the housing adjacent to the magnetic induction generator.

There is further provided aquarium equipment that includes the power generation apparatus described above.

Typically, the aquarium equipment is an aquarium in which the water pump further includes a pump housing and the impeller is mounted in the pump housing.

The first rotor assembly, the pump housing, and the impeller are mounted in a tank of the aquarium. The stator is mounted outside the tank.

A U-shaped iron core of the stator comprises two iron core protrusion portions that protrude out of the coil winding of the stator, an outer wall of the tank is recessed to define a stator receiving chamber that faces towards the tank, which includes two first receiving chambers spaced apart from each other. The iron core protrusion portions are disposed in the first receiving chambers. A receiving slot is defined in an inner wall of the tank and between the two first receiving chambers. The impeller fixedly connected to the first permanent magnet rotor in the receiving slot by the first rotating shaft, and the magnetic induction generator is disposed inside the tank adjacent to the stator of the first permanent magnet rotor.

Typically, the electric device includes a second lamp. A filter is detachably mounted in the tank and disposed at a bottom of the tank. The second lamp is mounted on the filter, the pump housing is detachably fixed to a lower end of the filter, and the stator receiving chamber is located at the bottom of the tank.

Typically, the water pump further includes a mounting base connected to the pump housing, the mounting base being disposed in the receiving slot. The first rotor assembly is mounted in mounting base. The magnetic induction generator is mounted in a sealing box, which is disposed at a side of the mounting base adjacent to the filter. A bottom of the filter is recessed to define a second mounting slot that faces towards the filter, and the sealing box and the pump housing are inserted and fixed to the second mounting slot.

Typically, the pump housing includes a pump housing body and a pump housing cover detachably connected to each other, the pump housing cover defines a water inlet, a side wall of the pump housing body away from the pump housing cover defines a through hole, the first rotating shaft passes through the through hole from a side of the mounting base to be connected to the impeller in the pump housing body, and an upper end of the pump housing is provided with a water outlet communicated to a drain pipe.

Typically, the aquarium equipment further includes a base. The stator is fixed to the base. The tank is detachably mounted on the base.

Typically, the aquarium equipment further includes a drive circuit configured to provide a low-voltage direct current power source and a voltage change and to control turning on and off of the electric device.

The present invention provides the following beneficial effects:

When an alternating current is input to the coil winding of the stator, an alternating magnetic field is generated causing the first permanent magnet rotor to rotate and drive the impeller to rotate and thus generate a centrifugal force to achieve purpose of pumping water. Since certain leakage magnetic field would be generated in the surroundings of the first permanent magnet rotor and the stator, these leakage magnetic fields can be utilized to enable the magnetic induction generator to generate an induced current that is to be used to power up the electric device (a low-power device) in the aquarium equipment. Thus, safety hazards such as electric leakage which may occur when the electric device is powered by using the power supply device alone can be avoided. In this invention, the power generation apparatus combines the water pump with the magnetic induction generator, so as to realize the purpose of powering up the electric device while pumping water at the same time. Compared with the related art, the operations in terms of supplying power to the electric device as well as turning on and off the electrical connection of the electric device are rendered more convenient.

### BRIEF DESCRIPTION OF DRAWINGS

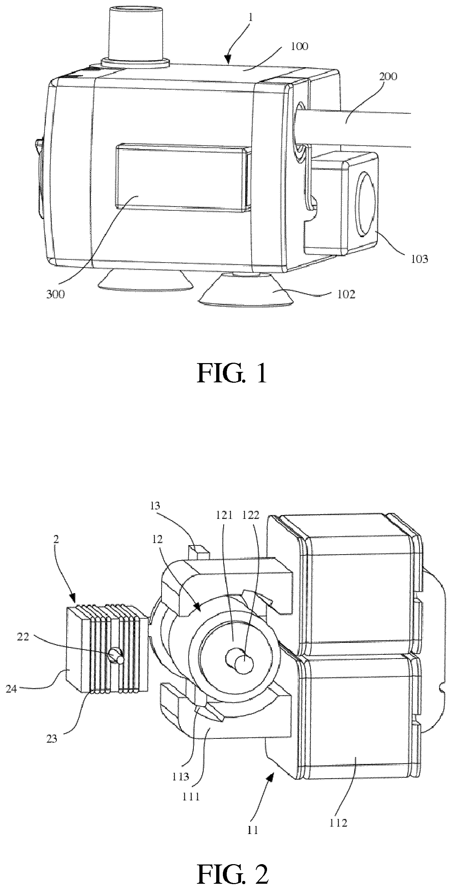

FIG. 1 is a perspective view of a power generation apparatus according to Embodiment one of the present invention;
FIG. 1 is a schematic view illustrating the mounting relationships between a magnetic induction generator and a water pump excluding a housing according to Embodiment one of the present invention;
FIG. 3 is a partial exploded view of the power generation apparatus according to Embodiment one of the present invention;
FIG. 4 is an exploded view of a magnetic induction generator and a mounting box according to Embodiment one of the present invention;
FIG. 5 is a cross-sectional view in which a magnetic induction generator is mounted in a mounting box according to Embodiment one of the present invention;
FIG. 6 is a perspective view of an aquarium equipment according to Embodiment two of the present invention;
FIG. 7 is a cross-sectional view of an aquarium equipment according to Embodiment two of the present invention;
FIG. 8 is an exploded view of a first perspective of an aquarium equipment according to Embodiment two of the present invention;
FIG. 9 is an exploded view of a second perspective of an aquarium equipment according to Embodiment two of the present invention; and
FIG. 10 is an exploded view of a magnetic induction generator and a water pump (excluding a stator) of an aquarium equipment according to Embodiment two of the present invention.

In the drawings:
1. Water Pump;
11. Stator; 111. U-shaped Iron Core; 112. Coil Winding; 113. Notch;
12. First Rotor Assembly; 121. First Permanent Magnet Rotor; 122. First Rotating Shaft;
13. Impeller;
2. Magnetic Induction Generator;
21. Second Permanent Magnet Rotor;
22. Second Rotating Shaft;
23. Power Generation Induction Coil;
24. Reel;
In embodiment one:
100. Housing; 101. First Mounting Slot; 102. Suction Plate; 103. First lamp;
200. Power Cable;
300. Mounting Box; 310. Box body; 311. Mounting Hole; 312. Admission Hole; 320. Cover body; 321. Positioning Column;
In embodiment two:
400. Tank; 410. Stator Receiving Chamber; 411. First receiving Chamber; 412. Second Receiving Chamber; 420. Receiving Slot;
500. Pump Housing; 501. Pump Housing Body; 502. Pump Housing Cover; 503. Water Inlet; 504. Water Outlet;
600. Mounting Base;
700. Filter; 701. Second Lamp;
800. Sealing Box; 801. Box Body; 802. Box Cover;
900. Base; 901. Stator Isolation Chamber; 902. Wire securing clip.

### DETAILED DESCRIPTION

Embodiments in accordance with the present invention will now be described in detail below. Examples of the embodiments are illustrated in the drawings, where the same or similar reference numerals indicate the same or similar elements or elements having the same or similar functions. The embodiments described below with reference to the drawings are merely exemplary; they are intended to explain the present invention, and are not to be construed as limiting the present invention.

In the description of the present invention, it should be understood that the orientational or positional relationships indicated by terms "inside", "outside" and the like are based on the orientational or positional relationships illustrated in the drawings, which are for the mere purpose of facilitating and simplifying the description of the present invention, and these relationships do not indicate or imply that the device or element referred to has a specific orientation and is constructed and operated in a specific orientation, and thus it is not to be construed as limiting the present invention.

Furthermore, terms like "first" and "second" are for description only and are not to be construed as indicating or implying relative importance or implicitly indicating the number of technical features as indicated. Thus, a feature defined as a "first" feature or a "second" feature may explicitly or implicitly include one or more of such a feature.

Unless otherwise expressly specified and defined, the term "fixed" is to be construed in a broad sense; for example, it is to be interpreted as permanently coupled, detachably coupled, or integrated; mechanically coupled or electrically coupled; directly coupled to each other or indirectly coupled to each other via an intermediary; or internally coupled or interactional between two components. For those of ordinary skill in the art, the above terms can be construed depending on specific contexts.

The technical solutions in accordance with the present invention will now be further described below by means of specific embodiments in conjunction with the drawings.

### Embodiment one

As illustrated in FIGS.1 to 5, embodiment one of the present invention provides a power generation apparatus, which includes a water pump 1 and a magnetic induction generator 2. The water pump 1 includes a housing 100 and a stator 11 mounted in the housing 100, a first rotor assembly 12, and an impeller 13 connected to the first rotor assembly 12. The first rotor assembly 12 includes a first permanent magnet rotor 121 and a first rotating shaft 122 disposed at an axis of the first permanent magnet rotor 121. The first permanent magnet rotor 121 is disposed adjacent to the stator 11. The magnetic induction generator 2 is disposed adjacent to the stator 11 or the first permanent magnet rotor 121 and is operative to be coupled to an electric device. The stator 11 includes a coil winding operative to be coupled to an external power source, and when the coil winding 112 is coupled to an input alternating current, the first permanent magnet rotor 121 is configured to rotate enabling the magnetic induction generator 2 to generate an induced current to power up the electric device. By arranging the magnetic induction generator 2 adjacent to the stator 11 or to the first permanent magnet rotor 121, an alternating magnetic field would be generated when the alternating current is input into the coil winding 12 of the stator 11, so that the first permanent magnet rotor 121 rotates about the stator 11. Meanwhile, since a certain leakage magnetic field would be generated in the surroundings of the first permanent magnet rotor 121 and the stator 11, these leakage magnetic fields can be utilized to enable the magnetic induction generator 2 to generate the induced current that is to be used to power up the electric device (a low-power device), thereby avoiding safety hazards such as electric leakage which may occur when the electric device in the tank is powered up by using the power supply device alone.

The power generation apparatus in the present invention combines the water pump 1 with the magnetic induction generator 2, so as to realize the purpose of powering up the electric device while pumping water at the same time. Compared with the related art, operations in terms of supplying power to the electric device as well as turning on and off the electrical connection of the electric device are rendered more convenient.

In this embodiment, a via hole is defined the housing 100 of the water pump 1 and configured for a power cable 200 to pass through. One end of the power cable 200 is coupled to the coil winding 112 of the stator 11, and the other end is coupled to an external power source base.

In this embodiment, as illustrated in FIG 2, the stator 11 includes a U-shaped iron core 111 and the coil winding 112 disposed around the U-shaped iron core 111. The U-shaped iron core 111 includes two iron core protrusion portions that protrude out of the coil winding 112. The first rotor assembly 12 is disposed between the two iron core protrusion portions, an inner side of each one of the two iron core protrusion portions is provided with a starting angle notch 113. When the alternating current is input into the coil winding 112 of the stator 11, the alternating magnetic field is generated. The alternating magnetic field is transmitted to the notch 113 (the starting angle) along the U-shaped iron core 111 (the silicon steel sheet). Since the presence of the notch 113 renders the generated magnetic field to be uneven, the first permanent magnet rotor 121 of the water pump 1 would set into rotation.

The electric device in this embodiment is the low-power device. Experiments prove that it is totally feasible to supply power to other low-power electric devices with this power supply method of the embodiment.

The magnetic induction generator 2 includes a second rotor assembly and a power generation induction coil 23. The second rotor assembly includes a second permanent magnet rotor 21 and a second rotating shaft 22 disposed at an axis of the second permanent magnet rotor 21, the power generation induction coil 23 is wound around an exterior of the second permanent magnet rotor 21. When the coil winding 112 is coupled to the alternating current, the second permanent magnet rotor 21 is operative to rotate relative to the power generation induction coil 23, thereby generating the induced current.

An axis of the second rotating shaft 22 and an axis of the first rotating shaft 122 may form an included angle that lies in the range of 0° to 15°. That is, the second rotating shaft 22 may run parallel to the first rotating shaft 122, or the two may run almost parallel to each other, so that the magnetic flux density of the alternating magnetic field passing through the power generation induction coil 23 can be relatively large, thereby generating a induced current that is large enough to power up the electric device.

Typically, the second rotating shaft 22 runs parallel to the first rotating shaft 122, so that the magnetic flux density of the alternating magnetic field passing through the power generation induction coil 23 can be largest.

In this embodiment, the magnetic induction generator 2 further includes a reel 24 disposed outside the second permanent magnet rotor 21. The second permanent magnet rotor 21 may be clearance-fitted to the reel 24. The power generation induction coil 23 is wound around on the reel 24 along an axis of the second permanent magnet rotor 21. Both ends of the reel 24 that reside along a length thereof are each provided with a rotating shaft seat. The second rotating shaft 22 passes through the reel 24 and to be connected to the rotating shaft seat. The power generation induction coil 23 is fixed to the second permanent magnet rotor 21 by the reel 24.

Furthermore, the power generation induction coil 23 includes a first power generation induction coil and a second power generation induction coil spaced apart from and coupled to each other. The first power generation induction coil and the second power generation induction coil are symmetrically arranged at two sides on a circumference of the second permanent magnet rotor 21, which may improve the power supply efficiency and power generation efficiency of the power generation induction coil 23.

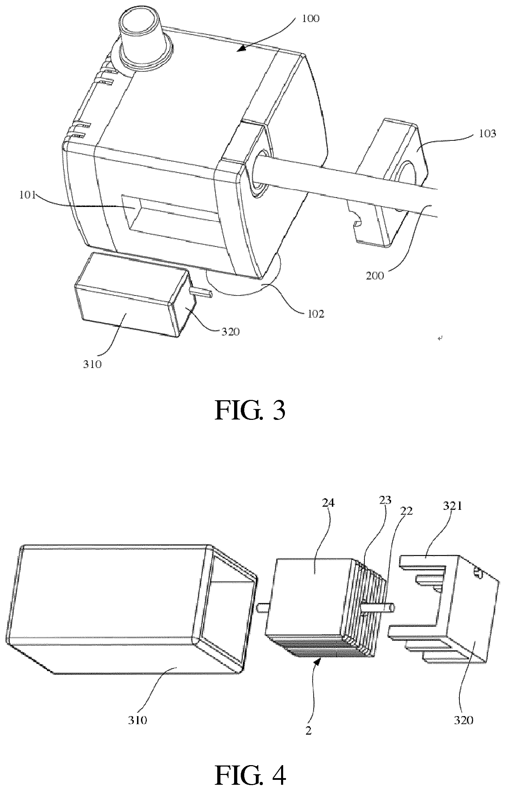

In this embodiment, the magnetic induction generator 2 is disposed outside the housing 100 of the water pump 1, which facilitates the mounting of the magnetic induction generator 2. Specifically, as illustrated in FIG 3, a first mounting slot 101 is provided in the housing 100 at a location adjacent to the first permanent magnet rotor 121, and the magnetic induction generator 2 is detachably mounted in the first mounting slot 101.

The power generation apparatus further includes a mounting box 300. The magnetic induction generator 2 is detachably mounted in the mounting box 300. The mounting box 300 is detachably mounted in the first mounting slot 101, and a lead wire of the power generation induction coil 23 passes through the mounting box 300 to be connected to the electric device. The mounting box 300 is clamped and fixed in the first mounting slot 101, which facilitates the disassembling or assembling of the mounting box.

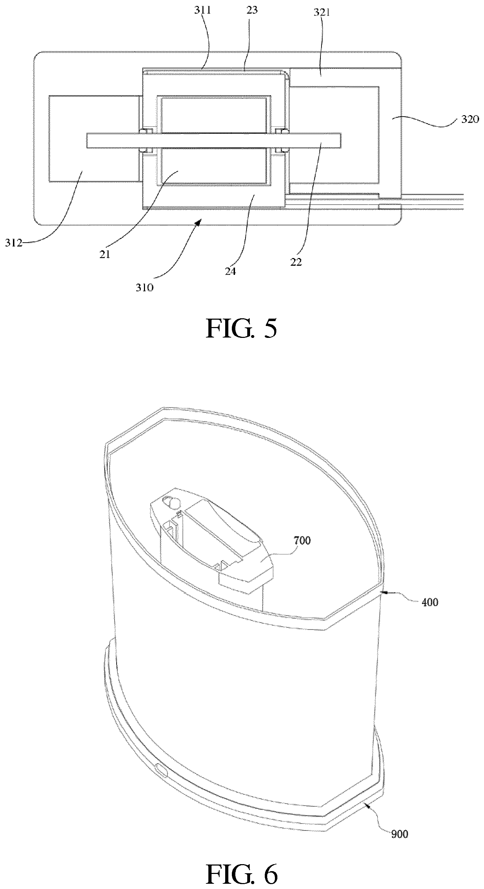

In this embodiment, as illustrated in FIGS. 4 and 5, the mounting box 300 includes a box body 310 having an open end and a cover body 320 configured to cover the open end, a positioning step is provided on an inner wall of the box body 310 that directly faces the open end, a plurality of positioning columns 321 are provided at intervals on a side of the cover body 320 adjacent to the box body 310, and when the cover body 320 covers the open end, both sides of the reel 24 abuts against the positioning step and the plurality of positioning columns 321, respectively, so that the reel and the power generation induction coil 23 are secured in the mounting box 300. Thus, the second rotating shaft 22 and the second permanent magnet rotor 21 may rotate relative to the reel 24 and the power generation induction coil 23, enabling the power generation induction coil 23 to generate the induced current.

Furthermore, the box body 310 is provided with a mounting hole 311 located adjacent to the open end and an admission hole 312 in communication with the mounting hole 311. The admission hole 312 has a smaller size than that of the mounting hole 311. The positioning step is formed between the admission hole 312 and the mounting hole 311.

The cover body 320 is provided with at least two of the positioning columns 321 disposed at intervals, and an admission area is formed between the two positioning columns 321. The magnetic induction generator 2 is mounted in the mounting hole 311, one end of the second rotating shaft 22 extends into the admission hole 312, and the other end extends into the admission area.

With the above structural design, the second rotating shaft 22 can be prevented from coming into contact with components other than the rotating shaft seat which may otherwise adversely affect the rotation of the second rotating shaft 22.

Of course, the magnetic induction generator 2 in this embodiment will not be limited to being mounted on the housing 100 of the water pump by means of the mounting box 300, the magnetic induction generator 2 may also be mounted on the housing 100 by means of directly perfusing an insulating material such as epoxy resin.

To facilitate the fixing the power generation apparatus to the aquarium equipment such as an aquarium, an outer side of one of the side walls of the housing 100 may be provided with multiple suction plates 102 arranged at intervals. The power generation apparatus can be selectively fixed to the aquarium by the suction plates 102.

The housing 100 is provided with a water inlet and a water outlet. The multiple suction plates 102 are disposed at intervals on an outer side of a side wall of the housing 100 where the water inlet or the water outlet is not arranged.

In this embodiment, the electric device includes a first lamp 103 arranged outside the housing 100 adjacent to the magnetic induction generator 2. Specifically, the first lamp 103 may be disposed at a side of the cover body away from the box body 310. The cover body 320 and the housing 100 may be respectively provided with a through hole configured for a lead wire of the power generation induction coil 23 to pass through. After passing through the through hole, the lead wire of the power generation induction coil 23 is coupled to the first lamp 103.

Furthermore, the first lamp 103 may include a light emitting diode (LED) and a sealing cover that seals and mounts the LED onto the housing 100, enabling the first lamp 103 to have a desirable waterproof functionality. The sealing cover may be provided with a light-transmitting region configured for the light of the LED is to be transmitted through.

The other embodiments differ from the above embodiment in that: the coil winding 112 is disposed adjacent to both ends of the U-shaped iron core 111 along a length thereof. The first permanent magnet rotor 121 is disposed outside the stator 11. The coil winding 112 may also be coupled to the alternating current so that the magnetic induction generator 2 is operative to generate the induced current.

Furthermore, two end surfaces of the U-shaped iron core 111 along the length may be flush with a side surface of the coil winding 112 adjacent to the first rotor assembly 12.

Embodiments of the present invention further provide an aquarium equipment, which includes the above power generation apparatus. The power generation apparatus may be directly disposed on the aquarium equipment such as an aquarium, a filter or a protein skimmer.

### Embodiment two

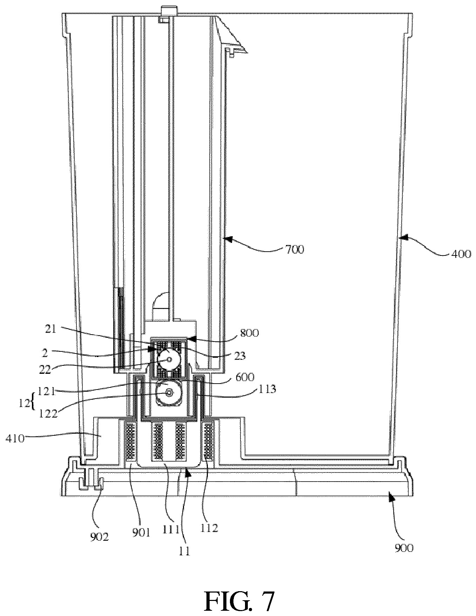

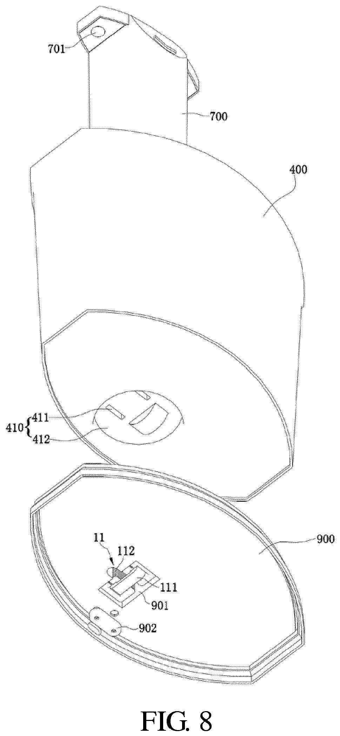

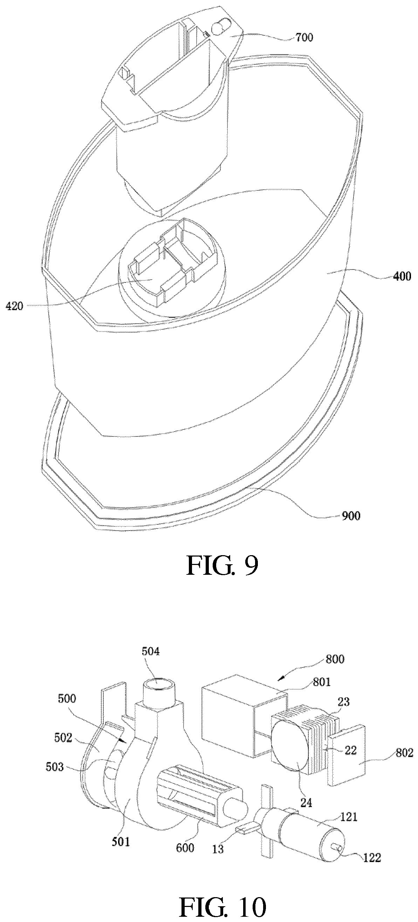

As illustrated in FIGS. 6 to 10, the embodiment two of the present invention provides an aquarium equipment. The aquarium equipment may be an aquarium, a filter or a protein skimmer. When the aquarium equipment is an aquarium, it includes a tank 400, a water pump 1, a magnetic induction generator 2, and an electric device disposed in the tank 400 and coupled to the magnetic induction generator 2. The water pump 1 includes a first rotor assembly 12 and a pump housing 500, mounted in the tank, an impeller 13 disposed in the pump housing 500, and a stator 11 mounted outside the tank 400. A U-shaped iron core 111 of the stator 11 has two iron core protrusion portions that protrude out of a coil winding 112. An outer wall of the tank 400 is recessed to define a stator receiving chamber 410 that faces towards the tank, which includes two first receiving chambers 411 spaced apart from each other. The iron core protrusion portions are arranged in the first receiving chambers 411, and a receiving slot 420 is defined in an inner wall of the tank 400 and between the two first receiving chambers 411. The first rotor assembly 12 includes a first rotating shaft 122 and a first permanent magnet rotor 121. The impeller 13 is secured to the first permanent magnet rotor 121 disposed in the receiving slot 420 by the first rotating shaft 122. The magnetic induction generator 2 is disposed inside the tank 400 adjacent to the stator 11 or the first permanent magnet rotor 121.The U-shaped iron core 111 (a silicon steel sheet) of the stator 11 has two iron core protrusion portions that protrude out of a coil winding 112 thereof, and in an inner side of each one of the two iron core protrusion portions is defined a notch 113. Each notch 113 is provided with a sloping surface. The two notches 113 are disposed up and down and spaced apart from each other, and the sloping surface of one notch 113 is inclined upwards, the sloping surface of the other notch 113 is inclined downwards. When an alternating current is input into the coil winding 112 of the stator 11, an alternating magnetic field is generated. The alternating magnetic field is transmitted to the notch 113 (a starting angle) along the U-shaped iron core 111 (the silicon steel sheet). Due to the presence of the notch 113, the generated magnetic field would be rendered uneven so that the first permanent magnet rotor 121 of the water pump 1 would rotate. Then, the first permanent magnet rotor 121 drives the impeller 12 to rotate thereby generating a centrifugal force. Under the action of the pump housing 500, water flows from a water inlet 503 to a water outlet 504, thus realizing the purpose of water pumping of the water pump 1. Meanwhile, a certain leakage magnetic field would be generated in the surroundings of the stator 11 of the water pump 1. This leakage magnetic field can be utilized to enable the magnetic induction generator to generate an induced current that can then be used to power up the electric device (a low-power device) in the aquarium.

As illustrated in FIG 2, in this embodiment the notch 113 has two surfaces, one of which is the sloping surface as described above, while the other is a plane that runs parallel to the bottom of the stator 11. This plane and the sloping surface form an angle called the starting angle that is configured for starting the rotation of the first permanent magnet rotor 121.

Compared with the related art, this embodiment can avoid safety hazards such as electric leakage which may occur when the electric device in the tank is powered up by using the power supply device independently.

In this embodiment, the electric devices in the tank 400 are all low-power devices. Experiments have proved that it is perfectly feasible to power up other low-power electric devices with this power supply mode in accordance with the embodiment as long as the water pump has a large enough power.

As illustrated in FIG 4, a side of the bottom of the tank 400 adjacent to the inside of the tank 400 is provided with an inserting part connected to an outer wall of the first receiving chamber 411. The inserting part is connected to the outer wall of the first receiving chamber 411 to form a recess. The recess includes the receiving slot 420 and a second mounting slot for mounting the pump housing 500. An outer wall of the inserting part is inserted and fitted with a lower end part of the filter 700. Further a waterproof part is annularly disposed outside outer wall of the inserting part and the first receiving chamber 411, the waterproof part is disposed at an outer side of the lower end part of the filter 700.

Specifically, as illustrated in FIGS. 1 and 5, the magnetic induction generator 2 includes a second rotor assembly and a power generation induction coil 23. The second rotor assembly includes a second permanent magnet rotor 21 and a second rotating shaft 22 located at an axis of the second permanent magnet rotor 21. The power generation induction coil 23 is would around an exterior of the second permanent magnet rotor 21. The second rotating shaft is disposed in the tank 400. The second rotating shaft is inserted and fitted with a shaft hole of the second permanent magnet rotor 21. The second permanent magnet rotor 21 is operative to rotate about the second rotating shaft 22. An axis of the second rotating shaft 22 and an axis of the first rotating shaft 122 forms an included angle that lies in the range of 0° to 15°. That is, the second rotating shaft 22 is parallel to the first rotating shaft 122, or the two are approximately parallel to each other, so that the magnetic flux density of the alternating magnetic field passing through the power generation induction coil 23 can be relatively large, thereby generating an induced current that is large enough to power up the electric device.

Typically, as illustrated in FIG. 2, the second rotating shaft 22 is parallel to the first rotating shaft 122, so that the magnetic flux density of the alternating magnetic field passing through the power generation induction coil 23 can be the highest.

In this embodiment, the magnetic induction generator 2 further includes a reel 24 disposed outside the second permanent magnet rotor 21. The reel 24 has a rotor chamber, and the second permanent magnet rotor 21 is mounted in the rotor chamber and clearance fitted with the reel 24. The power generation induction coil 23 is wound around the reel 24 along an axis of the second permanent magnet rotor 21. Each end of the reel 24 along a length thereof is provided with a rotating shaft seat. The second rotating shaft 22 passes through the reel 24 and is connected to the rotating shaft seat. The power generation induction coil 23 is fixed to the second permanent magnet rotor 21 by the reel 24.

Furthermore, the power generation induction coil 23 includes a first power generation induction coil and a second power generation induction coil disposed at intervals and coupled to each other. The first power generation induction coil and the second power generation induction coil are symmetrically disposed at two sides along a circumference of the second permanent magnet rotor 21, which can improve the power supply efficiency and the power generation efficiency of the power generation induction coil 23.

In this embodiment, the electric device includes a second lamp 701. The filter 700 is detachably mounted inside the tank 400 at a bottom thereof. The second lamp 701 is mounted on the filter 700. The pump housing 500 is detachably fixed to a lower end of the filter 700. Correspondingly, the stator receiving chamber 410 is disposed at the bottom of the tank 400. When cleaning the filter 700, the filter 700, the first rotor assembly 12 as well as the impeller 13 can be moved outside the tank 400 and cleaned altogether. Because it is not needed to power off the second lamp 701 before the removal, this facilitates the cleaning and maintenance of the aquarium. Specifically, the filter 700 is inserted and fixed to an outer side wall of the first receiving chamber 411 that protrudes within the tank 400, which facilitates the disassembling or assembling of the filter 700. When the filter 700 mounted with the first rotor assembly 12 and the impeller 13 of the water pump 1 is inserted into the tank 400, the first rotor assembly 12 is then located between the two first receiving chambers 411. As illustrated in FIG 5, the water pump 1 further includes a mounting base 600 connected to the pump housing 500. The mounting base 600 is located in the receiving slot 420. The first rotor assembly 12 is mounted in the mounting base 600. The magnetic induction generator 2 is mounted in a sealing box 800 which is located at a side of the mounting base adjacent to the filter 700. A bottom of the filter 700 is recessed to define a second mounting slot that faces towards the filter. The sealing box 800 and the pump housing 500 are inserted and fixed to the second mounting slot, thereby achieving a detachable connection between the water pump 1 and the filter 700.

Specifically, the sealing box 800 includes a box body 801 and a box cover 802 sealed and connected to an opening of the box body 801, which facilitates the mounting of the magnetic induction generator 2.

Of course, in other embodiments, in addition to use the sealing box 800, the power generation induction coil 23 of the magnetic induction generator 2 may also be sealed and then fixed to the filter 700 or the mounting base 600 by directly perfusing an insulating material such as epoxy resin.

The pump housing 500 includes a pump housing body 501 and a pump housing cover 502 that are detachably connected to each other. The pump housing cover 502 is provided with a water inlet 503, a side wall of the pump housing body 501 away from the pump housing cover 502 is provided with a through hole. The first rotating shaft 122 passes through the through hole from a side of the mounting base 600 to be connected to the impeller 13 in the pump housing body 501. An upper end of the pump housing 500 is provided with a water outlet 504 communicated with a drain pipe. The drain pipe is disposed in the filter 700.

Furthermore, the aquarium in this embodiment further includes a base 900. The stator 11 is fixed to the base 900. The tank 400 is detachably mounted on the base 900. Mounting the tank 400 on the base 900 can enable the first permanent magnet rotor 121 to be mounted between the two iron core protrusion portions of the stator 11, which facilitates the disassembling or assembling.

In this embodiment, the base 900 is recessed to define a stator isolation chamber 901 that faces toward the tank 400. The stator isolation chamber 901 has the same structure and size as those of the stator 11. The stator 11 is disposed in the stator isolation chamber 901 and secured to the base 900 by epoxy resin injection molding.

Specifically, the stator receiving chamber 410 further includes a second receiving chamber 412 configured for receiving the coil winding 112. The first receiving chamber 411 is communicated with the second receiving chamber 412. An outer wall of the stator isolation chamber 90 is inserted and fitted with the stator receiving chamber 410.

A wire slot is further provided on the base 900. The bottom of the base 900 is provided with a wire securing clip 902 connected to the wire slot for securing a wire that is led out of the base 900 and that is coupled to the coil winding 112 of the stator 11.

In this embodiment, the aquarium further includes a tank cover which is detachably mounted on an upper end of the tank 400.

In this embodiment, the aquarium further includes a drive circuit for providing a low-voltage direct current power source and a voltage change and controlling turning on and off of the electric device.

In this embodiment, the second lamp 701 is disposed on the upper end of the filter 700, where there is further provided with a button for controlling the switching on and off of the second lamp 701. The second lamp 701 may be a light emitting diode (LED) lamp, which is disposed on the upper end of the filter 700 and is operative to adjust the brightness as well as the lighting colors of the LED lamp by the drive circuit.

Apparently, the above embodiments of the present invention are merely illustrative of the present invention and are not intended to limit the implementations of the present invention. For those having ordinary skill in the art, alterations or modifications in other different forms can be made based on the above description. Implementations of the present invention cannot be and toned not be exhausted herein. The present invention is defined by the appended claims.

## Claims

1. A power generation apparatus, comprising a water pump (1) and a magnetic induction generator (2) ;
wherein the water pump (1) comprises a stator (11), a first rotor assembly (12), and an impeller (13) connected to the first rotor assembly (12), the first rotor assembly (12) comprising a first permanent magnet rotor (121) and a first rotating shaft (122) disposed at an axis of the first permanent magnet rotor (121), the first permanent magnet rotor (121) being disposed adjacent to the stator (11); and
wherein the magnetic induction generator (2) is disposed adjacent to the stator (11) or to the first permanent magnet rotor (121) so that a leakage magnetic field generated in the surroundings of the first permanent magnet rotor (121) and the stator (11) is utilized to enable the magnetic induction generator (2) to generate the induced current that is to be used to power up an electric device, and is operative to be coupled to the electric device, wherein the stator (11) comprises a coil winding (112) operative to be coupled to an external power source, and when the coil winding (112) is coupled to an input alternating current the first permanent magnet rotor (121) is configured to rotate enabling the magnetic induction generator (2) to generate an induced current to power up the electric device;
wherein the magnetic induction generator (2) comprises a second rotor assembly and a power generation induction coil (23);
wherein the second rotor assembly comprises a second permanent magnet rotor (21) and a second rotating shaft (22) disposed at an axis of the second permanent magnet rotor (21), the power generation induction coil (23) is wound around an exterior of the second permanent magnet rotor (21), and when the coil winding (112) is coupled to the input alternating current the second permanent magnet rotor (21) is operative to rotate relative to the power generation induction coil (23), thereby generating an induced current.

2. The power generation apparatus according to claim 1, wherein an axis of the second rotating shaft (22) and an axis of the first rotating shaft (122) forms an included angle that lies in the range of 0° to 15°.

3. The power generation apparatus according to claim 2, wherein the magnetic induction generator (2) further comprises a reel (24) disposed outside the second permanent magnet rotor (21), the second permanent magnet rotor (21) being clearance-fitted to the reel (24), the power generation induction coil (23) being wound around on the reel (24) along the axis of the second permanent magnet rotor (21), wherein both ends of the reel (24) that reside along a length thereof are each provided with a rotating shaft seat, and the second rotating shaft passes through the reel (24) to be connected to the rotating shaft seats.

4. The power generation apparatus according to claim 3, wherein the water pump (1) further comprises a housing (100), wherein the stator (11), the first rotor assembly (12), and the impeller (13) are all arranged in the housing (100).

5. The power generation apparatus according to claim 4, wherein the housing (100) defines a first mounting slot (101) at a location adjacent to the first permanent magnet rotor (121), and the magnetic induction generator (2) is detachably mounted in the first mounting slot (101).

6. The power generation apparatus according to claim 5, further comprising a mounting box (300) in which the magnetic induction generator (2) is detachably mounted, wherein the mounting box (300) is detachably mounted in the first mounting slot (101), and the power generation induction coil (23) comprises a lead wire that passes through the mounting box (300) to be coupled to the electric device.

7. The power generation apparatus according to claim 6, wherein the mounting box (300) comprises a box body (310) having an open end and a cover body (320) and configured to cover the open end, a positioning step is provided on an inner wall of the box body (310) that directly faces the open end, a plurality of positioning columns (321) are provided at intervals on a side of the cover body (320) adjacent to the box body (310), and when the cover body (320) covers the open end, both sides of the reel (24) abut against the positioning step and the plurality of positioning columns (321), respectively.

8. The power generation apparatus according to claim 7, wherein the box body (310) is provided with a mounting hole located adjacent to the open end and an admission hole in communication with the mounting hole, the admission hole having a smaller size than that of the mounting hole, wherein the positioning step is formed between the admission hole and the mounting hole; and the cover body (320) is provided with at least two of the positioning columns (321) disposed at intervals, and an admission area is formed between the two positioning columns (321), wherein the magnetic induction generator (2) is mounted in the mounting hole, one end of the second rotating shaft (22) extends into the admission hole, and the other end extends into the admission area.

9. The power generation apparatus according to any one of claims 4 to 8, wherein the electric device comprises a first lamp (103) disposed outside the housing (100) adjacent to the magnetic induction generator (2).

10. An aquarium equipment, comprising the power generation apparatus according to any one of claims 1 to 3.

11. The aquarium equipment according to claim 10, wherein the aquarium equipment is an aquarium wherein the water pump (1) further comprises a pump housing (500), and the impeller (13) is mounted in the pump housing (500);
wherein the first rotor assembly (12), the pump housing (500), and the impeller (13) are mounted in a tank (400) of the aquarium, and the stator (11) is mounted outside the tank (400);
and
a U-shaped iron core of the stator (11) comprises two iron core protrusion portions that protrude out of the coil winding (112) of the stator (11), an outer wall of the tank (400) is recessed to define a stator receiving chamber (410) that faces towards the tank (400), which comprises two first receiving chambers (411) spaced apart from each other, the iron core protrusion portions are disposed in the first receiving chambers (411), a receiving slot is defined in an inner wall of the tank (400) and between the two first receiving chambers (411), the impeller (13) is fixedly connected to the first permanent magnet rotor (121) in the receiving slot by the first rotating shaft, and the magnetic induction generator (2) is disposed inside the tank (400 adjacent to the stator (11) or the first permanent magnet rotor (121).

12. The aquarium equipment according to claim 11, wherein the electric device comprises a second lamp (701), a filter (700) is detachably mounted in the tank (400) and disposed at a bottom of the tank (400), the second lamp (701) is mounted on the filter (700), the pump housing (500) is detachably fixed to a lower end of the filter (700), and the stator receiving chamber (410) is located at the bottom of the tank (400).

13. The aquarium equipment according to claim 12, wherein the water pump (1) further comprises a mounting base (600) connected to the pump housing (500), is the mounting base (600) being disposed in the receiving slot, the first rotor assembly (12) is mounted in mounting base (600), the magnetic induction generator (2) is mounted in a sealing box (800), which is disposed at a side of the mounting base (600) adjacent to the filter (700), a bottom of the filter (700) is recessed to define a second mounting slot that faces towards the filter (700), and the sealing box (800) and the pump housing (500) are inserted and fixed to the second mounting slot.

14. The aquarium equipment according to any one of claims 11 to 13, further comprising a base, wherein the stator is fixed to the base, and the tank is detachably mounted on the base.

## Patentansprüche

1. Stromerzeugungsvorrichtung, umfassend eine Wasserpumpe (1) und einen Magnetinduktionsgenerator (2);
wobei die Wasserpumpe (1) einen Stator (11), eine erste Rotoranordnung (12) und ein Flügelrad (13) umfasst, das mit der ersten Rotoranordnung (12) verbunden ist, wobei die erste Rotoranordnung (12) einen ersten Permanentmagnetrotor (121) und eine erste Rotationswelle (122) umfasst, die auf einer Achse des ersten Permanentmagnetrotors (121) angeordnet ist, wobei der erste Permanentmagnetrotor (121) neben dem Stator (11) angeordnet ist; und
wobei der Magnetinduktionsgenerator (2) neben dem Stator (11) oder dem ersten Permanentmagnetrotor (121) angeordnet ist, so dass das in der Umgebung des ersten Permanentmagnetrotors (121) und des Stators erzeugte Streumagnetfeld dazu genutzt wird, den Magnetinduktionsgenerator (2) in die Lage zu versetzen, den Induktionsstrom zu erzeugen, der zum Einschalten eines elektrischen Gerätes verwendet wird, wobei der Magnetinduktionsgenerator (2) mit dem elektrischen Gerät verbunden werden kann und der Stator (11) eine Spulenwicklung (112) umfasst, die mit einer Fremdstromquelle verbunden werden kann, und wenn die Spulenwicklung (112) mit einem Eingangswechselstrom verbunden wird, dreht sich der erste Permanentmagnetrotor (121), wodurch der Magnetinduktionsgenerator (2) in die Lage versetzt wird, einen Induktionsstrom zum Einschalten des elektrischen Gerätes zu erzeugen;
wobei der Magnetinduktionsgenerator (2) eine zweite Rotoranordnung und eine Stromerzeugungs-Induktionsspule (23) umfasst;
wobei die zweite Rotoranordnung einen zweiten Permanentmagnetrotor (21) und eine zweite Rotationswelle (22) umfasst, die auf einer Achse des zweiten Permanentmagnetrotors (21) angeordnet ist, wobei die Stromerzeugungs-Induktionsspule (23) um eine Außenseite des zweiten Permanentmagnetrotors (21) gewickelt ist, und wenn die Spulenwicklung (112) mit dem Eingangswechselstrom verbunden ist, kann sich der zweite Permanentmagnetrotor (21) relativ zu der Stromerzeugungs-Induktionsspule (23) drehen, wodurch ein Induktionsstrom erzeugt wird.

2. Stromerzeugungsvorrichtung nach Anspruch 1, wobei eine Achse der zweiten Rotationswelle (22) und eine Achse der ersten Rotationswelle (122) einen eingeschlossenen Winkel bilden, der im Bereich von 0° bis 15° liegt.

3. Stromerzeugungsvorrichtung nach Anspruch 2, wobei der Magnetinduktionsgenerator (2) zudem eine außerhalb des zweiten Permanentmagnetrotors (21) angeordnete Rolle (24) umfasst, der zweite Permanentmagnetrotor (21) mit einem Spiel zu der Rolle (24) angeordnet ist und die Stromerzeugungs-Induktionsspule (23) entlang der Achse des zweiten Permanentmagnetrotors (21) um die Rolle (24) gewickelt ist, wobei beide Enden der Rolle (24), die entlang einer Länge der Rolle angeordnet sind, jeweils mit einem Rotationswellensitz versehen sind und die zweite Rotationswelle durch die Rolle (24) geführt wird, um mit den Rotationswellensitzen verbunden zu werden.

4. Stromerzeugungsvorrichtung nach Anspruch 3, wobei die Wasserpumpe (1) zudem ein Gehäuse (100) umfasst und der Stator (11), die erste Rotoranordnung (12) und das Flügelrad (13) in dem Gehäuse (100) untergebracht sind.

5. Stromerzeugungsvorrichtung nach Anspruch 4, wobei das Gehäuse (100) benachbart zu dem ersten Permanentmagnetrotor (121) einen ersten Befestigungsschlitz (101) abgrenzt und der Magnetinduktionsgenerator (2) herausnehmbar in dem ersten Befestigungsschlitz (101) montiert ist.

6. Stromerzeugungsvorrichtung nach Anspruch 5, zudem umfassend einen Montagekasten (300), in dem der Magnetinduktionsgenerator (2) herausnehmbar befestigt ist, wobei der Montagekasten (300) herausnehmbar in dem ersten Befestigungsschlitz (101) montiert ist und die Stromerzeugungs-Induktionsspule (23) einen Zuleitungsdraht umfasst, der durch den Montagekasten (300) geführt wird, um mit dem elektrischen Gerät verbunden zu werden.

7. Stromerzeugungsvorrichtung nach Anspruch 6, wobei der Montagekasten (300) einen Kastenkörper (310) mit einem offenen Ende und einem Abdeckkörper (320) umfasst, der dazu dient, das offene Ende abzudecken, wobei an einer Innenwand des Kastenkörpers (310) eine Positionierungsstufe vorgesehen ist, die dem offenen Ende direkt zugewandt ist, wobei an einer Seite des Abdeckkörpers (320) benachbart zu dem Kastenkörper (310) eine Mehrzahl von Positionierungsstäben (321) in Abständen angeordnet ist und beide Seiten der Rolle (24) an die Positionierungsstufe bzw. die Mehrzahl von Positionierungsstäben (321) anstoßen, wenn der Abdeckkörper (320) das offene Ende abdeckt.

8. Stromerzeugungsvorrichtung nach Anspruch 7, wobei der Kastenkörper (310) mit einer Befestigungsöffnung versehen ist, die benachbart zu dem offenen Ende angeordnet ist, und mit einer Aufnahmeöffnung, die mit der Befestigungsöffnung verbunden ist, wobei die Aufnahmeöffnung kleiner ist als die Befestigungsöffnung und die Positionierungsstufe zwischen der Aufnahmeöffnung und der Befestigungsöffnung ausgebildet ist; und wobei der Abdeckkörper (320) mit mindestens zwei der in Abständen angeordneten Positionierungsstäbe (321) versehen ist und zwischen den zwei Positionierungsstäben (321) ein Aufnahmebereich ausgebildet ist, wobei der Magnetinduktionsgenerator (2) in der Befestigungsöffnung montiert ist, wobei sich ein Ende der zweiten Rotationswelle (22) in die Aufnahmeöffnung erstreckt und das andere Ende sich in den Aufnahmebereich erstreckt.

9. Stromerzeugungsvorrichtung nach einem der Ansprüche 4 bis 8, wobei das elektrische Gerät eine erste Lampe (103) umfasst, die außerhalb des Gehäuses (100) benachbart zu dem Magnetinduktionsgenerator (2) angeordnet ist.

10. Aquariumausrüstung, welche die Stromerzeugungsvorrichtung nach einem der Ansprüche 1 bis 3 umfasst.

11. Aquariumausrüstung nach Anspruch 10, wobei die Aquariumausrüstung ein Aquarium ist, die Wasserpumpe (1) zudem ein Pumpengehäuse (500) umfasst und das Flügelrad (13) in dem Pumpengehäuse (500) montiert ist;
wobei die erste Rotoranordnung (12), das Pumpengehäuse (500) und das Flügelrad (13) in einem Tank (400) des Aquariums befestigt sind und der Stator (11) außerhalb des Tanks (400) befestigt ist; und
wobei ein U-förmiger Eisenkern des Stators (11) zwei vorstehende Abschnitte aufweist, die von der Spulenwicklung (112) des Stators (11) vorstehen, wobei eine Außenwand des Tanks (400) zurückversetzt ist, um eine Stator-Aufnahmekammer (410) zu begrenzen, die in Richtung des Tanks (400) zeigt und zwei, voneinander beabstandete erste Aufnahmekammern (411) umfasst, wobei die vorstehenden Abschnitte des Eisenkerns in den ersten Aufnahmekammern (411) angeordnet sind, in einer Innenwand des Tanks (400) zwischen den zwei ersten Aufnahmekammern (411) ein Aufnahmeschlitz ausgebildet ist, das Flügelrad (13) in dem Aufnahmeschlitz mittels der ersten Rotationswelle fest mit dem ersten Permanentmagnetrotor (121) verbunden ist und der Magnetinduktionsgenerator (2) im Inneren des Tanks (400) neben dem Stator (11) oder dem ersten Permanentmagnetrotor (121) angeordnet ist.

12. Aquariumausrüstung nach Anspruch 11, wobei das elektrische Gerät eine zweite Lampe (701) umfasst, ein Filter (700) herausnehmbar in dem Tank (400) an einer Unterseite des Tanks (400) befestigt ist, die zweite Lampe (701) an dem Filter (700) montiert ist, das Pumpengehäuse (500) an einem unteren Ende des Filters (700) abnehmbar befestigt ist und die Stator-Aufnahmekammer (410) an der Unterseite des Tanks (400) angeordnet ist.

13. Aquariumausrüstung nach Anspruch 12, wobei die Wasserpumpe (1) zudem eine mit dem Pumpengehäuse (500) verbundene Montagebasis (600) umfasst, die in dem Aufnahmeschlitz angeordnet ist, wobei die erste Rotoranordnung (12) an der Montagebasis (600) angeordnet ist, der Magnetinduktionsgenerator (2) in einem an einer Seite der Montagebasis (600) benachbart zu dem Filter (700) angeordneten Dichtkasten (800) untergebracht ist, eine Unterseite des Filters 87009 zurückversetzt ist, um einen zweiten Befestigungsschlitz zu begrenzen, der in Richtung des Filters (700) zeigt, wobei der Dichtkasten (800) und das Pumpengehäuse (500) in den zweiten Befestigungsschlitz eingefügt und darin befestigt sind.

14. Aquariumausrüstung nach einem der Ansprüche 11 bis 13, zudem eine Basis umfassend, wobei der Stator an der Basis befestigt und der Tank abnehmbar an der Basis montiert ist.

## Revendications

1. Un appareil de production d'énergie, comprenant une pompe à eau (1) et un générateur à induction magnétique (2);
dans lequel la pompe à eau (1) comprend un stator (11), un premier ensemble de rotor (12) et une roue (13) reliée au premier ensemble de rotor (12), le premier ensemble de rotor (12) comprenant un premier rotor à aimant permanent (121) et un premier arbre rotatif (122) disposé au niveau d'un axe du premier rotor à aimant permanent (121), le premier rotor à aimant permanent (121) étant disposé de manière adjacente au stator (11); et
dans lequel le générateur d'induction magnétique (2) est disposé de manière adjacente au stator (11) ou au premier rotor à aimant permanent (121) de sorte qu'un champ magnétique de fuite généré dans l'environnement du premier rotor à aimant permanent (121) et du stator (11) est utilisé pour permettre au générateur d'induction magnétique (2) de générer le courant induit qui doit être utilisé pour alimenter un dispositif électrique, et fonctionne pour être couplé au dispositif électrique, dans lequel le stator (11) comprend un enroulement de bobine (112) fonctionnant pour être couplé à une source d'alimentation externe, et lorsque l'enroulement de bobine (112) est couplé à un courant alternatif d'entrée, le premier rotor à aimant permanent (121) est configuré pour tourner, permettant au générateur d'induction magnétique (2) de générer un courant induit pour alimenter le dispositif électrique;
dans lequel le générateur d'induction magnétique (2) comprend un deuxième ensemble de rotor et une bobine d'induction de production d'énergie (23);
dans lequel le deuxième ensemble de rotor comprend un deuxième rotor à aimant permanent (21) et un deuxième arbre rotatif (22) disposé au niveau d'un axe du deuxième rotor à aimant permanent (21), la bobine d'induction de production d'énergie (23) est enroulée autour d'un extérieur du deuxième rotor à aimant permanent (21), et lorsque l'enroulement de bobine (112) est couplé au courant alternatif d'entrée, le deuxième rotor à aimant permanent (21) fonctionne pour tourner par rapport à la bobine d'induction de production d'énergie (23), générant ainsi un courant induit.

2. Appareil de production d'énergie selon la revendication 1, dans lequel un axe du deuxième arbre rotatif (22) et un axe du premier arbre rotatif (122) forment un angle inclus qui se situe dans la plage de 0° à 15°.

3. Appareil de production d'énergie selon la revendication 2, dans lequel le générateur d'induction magnétique (2) comprend en outre une bobine (24) disposée à l'extérieur du deuxième rotor à aimant permanent (21), le deuxième rotor à aimant permanent (21) étant monté avec jeu sur la bobine (24), la bobine d'induction de production d'énergie (23) étant enroulée sur la bobine (24) le long de l'axe du deuxième rotor à aimant permanent (21), dans lequel les deux extrémités de la bobine (24) qui se trouvent sur une longueur de celle-ci sont chacune pourvues d'un siège d'arbre rotatif, et le deuxième arbre rotatif passe à travers la bobine (24) pour être connecté aux sièges d'arbre rotatif.

4. Appareil de production d'énergie selon la revendication 3, dans lequel la pompe à eau (1) comprend en outre un boîtier (100), dans lequel le stator (11), le premier ensemble de rotor (12) et la roue (13) sont tous disposés dans le boîtier (100).

5. Appareil de production d'énergie selon la revendication 4, dans lequel le boîtier (100) définit une première fente de montage (101) à un emplacement adjacent au premier rotor à aimant permanent (121), et le générateur d'induction magnétique (2) est monté de manière amovible dans la première fente de montage (101).

6. Appareil de production d'énergie selon la revendication 5, comprenant en outre un boîtier de montage (300) dans lequel le générateur d'induction magnétique (2) est monté de manière amovible, dans lequel le boîtier de montage (300) est monté de manière amovible dans la première fente de montage (101), et la bobine d'induction de production d'énergie (23) comprend un fil conducteur qui passe à travers le boîtier de montage (300) pour être couplé à l'appareil électrique.

7. Appareil de production d'énergie selon la revendication 6, dans lequel la boîte de montage (300) comprend un corps de boîte (310) ayant une extrémité ouverte et un corps de couvercle (320) et configuré pour couvrir l'extrémité ouverte, une marche de positionnement est prévue sur une paroi intérieure du corps de boîte (310) qui fait directement face à l'extrémité ouverte, une pluralité de colonnes de positionnement (321) sont prévues à intervalles sur un côté du corps de couvercle (320) adjacent au corps de boîte (310), et lorsque le corps de couvercle (320) couvre l'extrémité ouverte, les deux côtés de la bobine (24) viennent en butée contre la marche de positionnement et la pluralité de colonnes de positionnement (321), respectivement.

8. Appareil de production d'énergie selon la revendication 7, dans lequel le corps du boîtier (310) est pourvu d'un trou de montage situé à proximité de l'extrémité ouverte et d'un trou d'admission en communication avec le trou de montage, le trou d'admission ayant une taille plus petite que celle du trou de montage, dans lequel la marche de positionnement est formée entre le trou d'admission et le trou de montage;
et le corps du couvercle (320) est pourvu d'au moins deux des colonnes de positionnement (321) disposées à intervalles, et une zone d'admission est formée entre les deux colonnes de positionnement (321), dans lequel le générateur d'induction magnétique (2) est monté dans le trou de montage, une extrémité du deuxième arbre rotatif (22) s'étend dans le trou d'admission, et l'autre extrémité s'étend dans la zone d'admission.

9. Appareil de production d'énergie selon l'une quelconque des revendications 4 à 8, dans lequel l'appareil électrique comprend une première lampe (103) disposée à l'extérieur du boîtier (100) de manière adjacente au générateur d'induction magnétique (2).

10. Un équipement d'aquarium, comprenant l'appareil de production d'énergie selon l'une des revendications 1 à 3.

11. Équipement d'aquarium selon la revendication 10, dans lequel l'équipement d'aquarium est un aquarium dans lequel la pompe à eau (1) comprend en outre un boîtier de pompe (500), et la roue (13) est montée dans le boîtier de pompe (500);
dans lequel le premier ensemble de rotor (12), le corps de pompe (500) et la roue (13) sont montés dans un réservoir (400) de l'aquarium, et le stator (il) est monté à l'extérieur du réservoir (400); et
un noyau de fer en forme de U du stator (11) comprend deux parties en saillie du noyau de fer qui dépassent de l'enroulement de bobine (112) du stator (11), une paroi extérieure du réservoir (400) est évidée pour définir une chambre de réception du stator (410) qui est tournée vers le réservoir (400), qui comprend deux premières chambres de réception (411) espacées l'une de l'autre, les parties en saillie du noyau de fer sont disposées dans les premières chambres de réception (411), une fente de réception est définie dans une paroi intérieure du réservoir (400) et entre les deux premières chambres de réception (411), la roue (13) est reliée de manière fixe au premier rotor à aimant permanent (121) dans la fente de réception par le premier arbre rotatif, et le générateur d'induction magnétique (2) est disposé à l'intérieur du réservoir (400) de manière adjacente au stator (11) ou du premier rotor à aimant permanent (121).

12. Équipement d'aquarium selon la revendication 11, dans lequel l'appareil électrique comprend une deuxième lampe (701), un filtre (700) est monté de manière amovible dans le réservoir (400) et disposé au fond du réservoir (400), la deuxième lampe (701) est montée sur le filtre (700), le corps de pompe (500) est fixé de manière amovible à une extrémité inférieure du filtre (700), et la chambre de réception du stator (410) est située au fond du réservoir (400).

13. Équipement d'aquarium selon la revendication 12, dans lequel la pompe à eau (1) comprend en outre une base de montage (600) reliée au corps de pompe (500), la base de montage (600) étant disposée dans la fente de réception, le premier ensemble de rotor (12) est monté dans la base de montage (600), le générateur d'induction magnétique (2) est monté dans un boîtier d'étanchéité (800) qui est disposé sur un côté de la base de montage (600) adjacent au filtre (700), un fond du filtre (700) est évidé pour définir une deuxième fente de montage qui fait face au filtre (700), et le boîtier d'étanchéité (800) et le boîtier de la pompe (500) sont insérés et fixés à la deuxième fente de montage.

14. Équipement d'aquarium selon l'une des revendications 11 à 13, comprenant en outre une base, dans laquelle le stator est fixé à la base, et le réservoir est monté de manière amovible sur la base.
